# EUROPÄISCHE PATENTSCHRIFT

(11) **EP 3 380 444 B1**
(45) Veröffentlichungstag und Bekanntmachung des Hinweises auf die Patenterteilung: **02.09.2020**
(21) Anmeldenummer: 16805750.3
(22) Anmeldetag: 24.11.2016
(51) Int. Cl.: C04B 35/52, C04B 35/532, C04B 35/626, C04B 41/48, B33Y 10/00, B32B 18/00, C04B 41/83, C04B 41/00, B29C 64/165

(54) **KUNSTSTOFF-BAUTEIL MIT KOHLENSTOFFFÜLLSTOFF**
PLASTIC COMPONENT COMPRISING A CARBON FILLER
ÉLÉMENT EN PLASTIQUE CHARGÉ CARBONE

(30) Priorität: 24.11.2015 DE 102015223238
(43) Veröffentlichungstag der Anmeldung: 03.10.2018
(73) Patentinhaber: SGL Carbon SE, 65201 Wiesbaden (DE)
(72) Erfinder: ÖTTINGER, Oswin, 86405 Meitingen (DE); RIVOLA, Dominik, 86405 Meitingen (DE); BACHER, Jürgen, 86405 Meitingen (DE)
(86) Internationale Anmeldenummer: PCT/EP2016/078745
(87) Internationale Veröffentlichungsnummer: WO 2017/089500

(56) Entgegenhaltungen:
- WO-A1-2016/089618
- WO-A2-2015/038260
- BG-Y1- 407
- JP-A- H05 331 314
- JP-A- 2011 068 125
- US-A- 5 124 397
- US-A1- 2003 044 614
- US-A1- 2003 044 614
- US-A1- 2005 003 200
- US-A1- 2008 067 477
- JOOHO MOON ET AL: "Fabrication of functionally graded reaction infiltrated SiC-Si composite by three-dimensional printing (3DP(TM)) process", MATERIALS SCIENCE AND ENGINEERING: A, Bd. 298, Nr. 1-2, 1. Januar 2001 (2001-01-01), Seiten 110-119, XP055272634, AMSTERDAM, NL ISSN: 0921-5093, DOI: 10.1016/S0921-5093(00)01282-X
- KAUSHIK ALAYAVALLI ET AL: "Fabrication of modified graphite bipolar plates by indirect selective laser sintering (SLS) for direct methanol fuel cells", RAPID PROTOTYPING JOURNAL, Bd. 16, Nr. 4, 15. Juni 2010 (2010-06-15), Seiten 268-274, XP055343231, GB ISSN: 1355-2546, DOI: 10.1108/13552541011049289
- Ssuwei Chen ET AL: "Development of SLS fuel cell current collectors", RAPID PROTOTYPING JOURNAL, vol. 12, no. 5, 1 October 2006 (2006-10-01), pages 275-282, XP55676279, GB ISSN: 1355-2546, DOI: 10.1108/13552540610707031

## Beschreibung

Die vorliegende Erfindung betrifft ein dreidimensionales Bauteil aus einem Verbundwerkstoff enthaltend Kohlenstoffpartikel in Kunststoffmatrix, ein Verfahren zur Herstellung des Bauteils sowie die Verwendung des Bauteils.

Gleitkörper werden überall dort eingesetzt, wo sich mindestens zwei Maschinen- oder Geräteteile mit der technischen Aufgabe, einen möglichst geringen Reibungswiderstand zu erreichen, unter einer gewissen Andruckkraft berühren und relativ zueinander bewegen. Bei solchen Bewegungen soll der an den Reibflächen entstehende Abrieb sowie die dort entwickelte Reibungswärme ein Minimum erreichen. Beispiele für derartige Anwendungen sind Trenn- oder Drehschieber in Pumpen und Verdichtern, Gleitlager, Gleitringdichtungen oder Bürsten und Schleifstücke für die Übertragung elektrischer Ströme. Wo eine ausreichende Schmierung der sich relativ zueinander bewegenden Teile gewährleistet ist, bereitet die Auswahl geeigneter Werkstoffe für die aneinander gleitenden Teile keine Schwierigkeiten. Sehr häufig treten jedoch Betriebszustände auf, bei denen wie beim Anfahren oder Auslaufen von Maschinen eine ausreichende Schmierung zeitlich begrenzt fehlt oder bei denen völlig ohne Schmierung gearbeitet werden muss und Trockenlauf vorliegt.

Für diese Anwendungsfälle werden Gleitkörper eingesetzt, die Substanzen mit einer eigenen Schmierfähigkeit wie Graphit oder Molybdänsulfid, enthalten. Allerdings reicht die Schmierfähigkeit der meisten dieser "Trockenschmierstoffe" in befriedigendem Maße nur soweit wie sich noch ein dünner Feuchtigkeitsfilm, der beispielsweise auf den Feuchtigkeitsgehalt der umgebenden Atmosphäre zurückgeht, aufbauen kann. Wenn wie beim Arbeiten in sehr trockener Luft, in stark getrockneten Medien, unter Vakuum, in großen Höhen oder bei hohen Temperaturen auch dies nicht mehr gegeben ist, genügen auch die vorgenannten, eine Eigenschmierwirkung aufweisenden Stoffe den Anforderungen nicht mehr und es sind weitere Maßnahmen erforderlich.

In der EP 0 915 129 B1 werden Gleitwerkstoffe beschrieben, die aus einem Graphitpartikel/Kunststoffmatrix-Verbundwerkstoff bestehen und mittels Spritzgießverfahren hergestellt werden. Dabei sind sämtliche Füllstoffe, also auch die Graphitpartikel im Gleitwerkstoffkörper an ihren Oberflächen mit einem Harzbinder überzogen, welcher auch die Matrix bildet. Die für die genannten Anwendungen wichtigen Eigenschaften wie Wärmeleitfähigkeit und elektrische Leitfähigkeit sind daher nicht besonders hoch.

JOOHO MOON ET AL: "Fabrication of functionally graded reaction infiltrated SiC-Si composite by three-dimensional printing (3DP(TM)) process",MATERIALS SCIENCE AND ENGINEERING: A, Bd. 298, Nr. 1-2, 1. Januar 2001 (2001-01-01), Seiten 110-119, AMSTERDAM, NL ISSN: 0921-5093, zeigt ein Verfahren zur Herstellung von SiC/Si Verbundwerkstoffen mittels einem 3D-Druckverfahren. Amorphe Kohlenstoffgranulate mit Korngrösse 45-105 Mikron wurden schichtweise gedruckt. Die Kohlenstoffschichten wurden mit einer Lösung von Furanharz bedruckt. Danach wurde bei 80°C ausgehärtet und bei 520°C karbonisiert. Anschließend wurde bei 1450°C mit flüssigem Si schmelzinfiltriert.

WO 2015/038260 A2 zeigt ein 3D-Druckverfahren, bei dem Kohlenstoffpulverschichten mit Binderschichten bedruckt werden. Als Kohlenstoffpulver wird z.B. Graphit oder Koks verwendet. Die Pulverteilchen können sphärisch sein. Die Bindemittel können z.B. Phenolharz oder Epoxidharz sein. Diese Körper werden bei 800-1200°C karbonisiert. Nach der Karbonisierung kann der Körper mit Pech infiltriert werden und optional wieder karbonisiert werden

KAUSHIK ALAYAVALLI ET AL: "Fabrication of modified graphite bipolar plates by indirect selective laser sintering (SLS) for direct methanol fuel cells",RAPID PROTOTYPING JOURNAL, Bd. 16, Nr. 4, 15. Juni 2010 (2010-06-15), Seiten 268-274, GB ISSN: 1355-2546, zeigt einen schichtweise aufgebauten Graphitkohlenstoffkörper, der mit Kunststoff infiltriert ist. Die Infiltration führt zu einem dichten Verbundwerkstoff. Die resultierende Platte wird als elektrischer Kontakt verwendet.

Die Aufgabe der vorliegenden Erfindung ist es daher, ein Bauteil zur Verfügung zu stellen, das hinsichtlich Wärmeleitfähigkeit und elektrische Leitfähigkeit verbesserte Eigenschaften aufweist und das beliebig komplexe Strukturen, wie zum Beispiel Hohlräume, wie Kühlkanäle, und Hinterschnitte annehmen kann, dabei weiterhin die Anforderungen an die mechanische Stabilität erfüllt und gleichzeitig einfach und kostengünstig herzustellen ist.

Die Aufgabe wurde gelöst durch einen mittels dem 3D-Druck hergestellten porösen Kohlenstoffkörper in einer Kunststoffmatrix.

Ein Aspekt der vorliegenden Erfindung stellt ein Verfahren zur Herstellung eines dreidimensionalen Bauteils aus einem Verbundwerkstoff enthaltend Kohlenstoff und Kunststoff dar, das die folgenden Schritte umfasst:
a) Bereitstellen einer pulverförmigen Zusammensetzung umfassend einen oder mehrere Bestandteile, welche ausgewählt sind aus der Gruppe bestehend aus amorphen Kohlenstoff, Graphit und deren Mischformen,
b) Bereitstellen eines flüssigen Binders,
c) flächiges Ablegen einer Lage aus dem in a) bereitgestellten Material und lokales Ablegen von Tröpfchen des in b) bereitgestellten Materials auf diese Lage und beliebig häufiges Wiederholen des Schrittes c), wobei das lokale Ablegen der Tröpfchen in den jeweils nachfolgenden Wiederholungen dieses Schrittes entsprechend der gewünschten Form des herzustellenden Bauteils angepasst wird,
d) zumindest teilweises Aushärten oder Trocknen des Binders und Erhalt eines die gewünschte Form des Bauteils aufweisenden Grünkörpers,
e) Imprägnieren des Grünkörpers mit einem flüssigen Kunstharz und
f) Aushärten des Kunstharzes zu einer Kunstharzmatrix.

Unter beliebig häufigem Wiederholen ist zu verstehen, dass das flächige Ablegen einer Lage aus dem in a) bereitgestellten Material und das lokales Ablegen von Tröpfchen des in b) bereitgestellten Materials auf diese Lage so oft wie gewünscht wiederholt wird.

Unter dem Erhalt eines die gewünschte Form des Bauteils aufweisenden Grünkörpers ist im Rahmen der vorliegenden Erfindung Folgendes zu verstehen. Nach dem Aushärten oder Trocknen des Binders ist der Grünkörper noch von einer Pulverschüttung, auch Pulverbett genannt, aus losen Partikeln der pulverförmigen Zusammensetzung umgeben. Der Grünkörper muss daher aus der Pulverschüttung entnommen bzw. von den losen, nicht-gebundenen Partikeln abgetrennt werden. Dies wird in der Literatur zu 3D-Druck auch als "Entpacken" des gedruckten Bauteils bezeichnet. An das Entpacken des Grünkörpers kann sich eine (Fein-)Reinigung desselben anschließen, um anhaftende Partikelreste zu entfernen. Das Entpacken kann z. B. durch Absaugen von den losen Partikeln mit einem leistungsstarken Sauger erfolgen. Die Art des Entpackens ist jedoch nicht besonders eingeschränkt und es können sämtliche bekannten Methoden angewandt werden.

Gemäß einer bevorzugten Ausführungsform des erfindungsgemäßen Verfahrens umfasst Schritt d) eine Carbonisierung des Grünkörpers bei einer Temperatur zwischen 500°C und 1300°C. Dies kann sowohl nach, als auch vor dem Erhalt des Grünkörpers, also noch zu einem Zeitpunkt, in dem sich der Grünkörper im Pulverbett befindet, geschehen. Letztere Variante ist zwar aufwendiger, bei der Verwendung von thermoplastischen, bei Raumtemperatur flüssigen Bindern wie Pech jedoch erforderlich. Durch die Carbonisierung wird der Binder des Grünkörpers in Kohlenstoff umgewandelt, wodurch sich ein durchgängiges Netzwerk aus Kohlenstoff durch das gesamte Bauteil zieht. Dies führt zu verbesserten Eigenschaften hinsichtlich Wärmeleitfähigkeit und elektrische Leitfähigkeit.

Bevorzugt umfasst Schritt d) eine Graphitierung des Grünkörpers bei einer Temperatur von mindestens 2000°C, weiter bevorzugt mindestens 2400°C. Auch hier kann die Temperaturbehandlung sowohl nach, als auch vor dem Erhalt des Grünkörpers geschehen. Dies führt zu noch höheren Werten in der Wärmeleitfähigkeit und elektrische Leitfähigkeit. Wird der Grünkörper dieser Graphitierung unterzogen, so läuft die zuvor genannte Carbonisierung während der Aufheizung auf die gewählte Graphitierungstemperatur automatisch mit ab. Carbonisierung und Graphitierung werden daher aus wirtschaftlichen Gründen bevorzugt in einem Schritt durchgeführt, sie können jedoch auch separat durchgeführt werden.

Um ein weiter verdichtetes Kohlenstoffnetzwerk zu erhalten und damit die Wärmeleitfähigkeit und elektrische Leitfähigkeit noch weiter zu steigern, kann beispielsweise die Menge des in Schritt c) abgelegten flüssigen Binders erhöht werden. Dies ist jedoch relativ zeit- und damit kostenintensiv. Bevorzugt ist es stattdessen, dass der Grünkörper zwischen den Schritten d) und e) ein- oder mehrmalig einer Nachverdichtung unterzogen wird, umfassend die folgenden Schritte:
d1) Imprägnieren des Grünkörpers mit einem Kohlenstofflieferanten ,
d2) Carbonisieren des Grünkörpers bei einer Temperatur zwischen 500°C und 1300°C. Unter einem Kohlenstofflieferanten ist im Rahmen der vorliegenden Erfindung eine Substanz zu verstehen, die beim Erhitzen auf 800°C unter Ausschluss von oxidierenden Stoffen einen Kohlenstoff-Rückstand bildet, dessen Masse mindestens 20% der Masse (im Falle von Lösungen, der Trockenmasse) der eingesetzten Substanz beträgt. Bevorzugte Kohlenstofflieferanten sind Phenolharze, Furanharze, Zucker oder Peche. Diese können auch als Lösungen eingesetzt werden, wie es beispielsweise bei Zucker erforderlich ist. Die Nachverdichtungsschritte d1) und d2) können auch in situ erfolgen, wie beispielsweise mittels Gasphaseninfiltration (CVI), wobei als Kohlenstofflieferant ein Kohlenwasserstoffgas verwendet wird und die Gasphasenabscheidung typischerweise bei etwa 700°C bis 1300°C abläuft. Weiter bevorzugt ist schließlich, dass der Grünkörper nach der Nachverdichtung bei einer Temperatur von mindestens 2000°C, weiter bevorzugt mindestens 2400°C graphitiert wird.

Wenn im Folgenden von Kohlenstoffpartikeln die Rede ist, so sind damit die Bestandteile der erfindungsgemäßen pulverförmigen Zusammensetzung, gemeint. Die verwendeten Kohlenstoffpartikel sind nicht besonders eingeschränkt. Sie umfassen erfindungsgemäß amorphen Kohlenstoff und Graphit sowie sämtliche Mischformen dieser. Unter Mischformen sind Arten von Kohlenstoff zu verstehen, die eine teilweise amorphe, teilweise graphitische Kohlenstoffstruktur aufweisen. Bevorzugt umfassen die Kohlenstoffpartikel Acetylenkoks, Flexikoks, Fluidkoks, Shot Coke, Steinkohlenteerpechkoks, Petrolkoks, Rußkoks, Anthrazit, synthetischer Graphit, Kugelgraphit, mikrokristalliner Naturgraphit, carbonisierte lonenaustauscherharzkügelchen, ein Granulat von Koks, wobei sie weiter bevorzugt aus diesen oder deren Mischung bestehen. Demgegenüber sind weniger bevorzugt makrokristalliner Naturgraphit (Flockengraphit) und Kohlenstoffe und Graphite auf Basis von Nadelkoksen, da diese Werkstoffe meist in einer für das 3D-Drucken ungünstigen Partikelform vorliegen. Alle Kokssorten können als Grünkoks, carbonisiert oder graphitiert, d.h. hochtemperaturbehandelt bei über 500°C, beziehungsweise über 2000°C, vorliegen. Entsprechendes gilt für Anthrazite. Bevorzugt liegen die Kokssorten jedoch als carbonisierter oder graphitierter Koks vor, da diese weniger Volatile enthalten und eine niedrige thermische Ausdehnung besitzen. Die genannten bevorzugten Kokssorten sind deshalb vorteilhaft, weil deren Partikel hinsichtlich des Formfaktors (Breite/Länge) annähernd kugelförmig, also rund sind. Dies führt zu einer verbesserten Verarbeitbarkeit im 3D-Druck, sowie zu homogeneren und isotroperen Eigenschaften der 3D-gedruckten Bauteile.

Besonders bevorzugt sind weiterhin Acetylenkoks, Flexikoks, Fluidkoks und Shot Coke, da diese gegenüber Graphit, aufgrund ihrer größeren Härte, verschleißstabiler sind. Diese Kokssorten sind darüber hinaus deshalb vorteilhaft, weil deren Partikel eine annähernd kugelförmige Gestalt aufweisen, also rund sind. Dies führt zu einer noch weiter verbesserten Verarbeitbarkeit im 3D-Druck, sowie zu homogeneren und isotroperen Eigenschaften der 3D-gedruckten Bauteile. Am meisten bevorzugt ist diesbezüglich Acetylenkoks, da er wenige Verunreinigungen aufweist und eine besonders sphärische Gestalt besitzt. Acetylenkoks ist weiterhin deshalb am meisten bevorzugt, da diese Kokssorte besonders rein ist. Der Aschewert liegt bei ca. 0,01%, und die metallischen Verunreinigung, wie zum Beispiel für Na, Ni, Fe und V, liegen typischerweise durchweg weit unter 50 ppm. Flexikoks hingegen hat einen Aschewert im Bereich 1%. Oben genannte metallische Verunreinigungen liegen im Bereich von mehreren 100 ppm bis hin zu mehr als1000 ppm. Viele dieser Verunreinigung wirken katalytisch auf das Oxidationsverhalten des Materials. Verunreinigungen, wie z.B. Nickeloxide, in stark verunreinigten Koksen mit Gehalten grösser 0,1% sind sogar als krebserzeugend nach Kat 1A einzustufen, wodurch die Handhabbarkeit sowie Verarbeitbarkeit als auch die Verwendung von stark verunreinigten Koksen erheblich eingeschränkt wird.

Fluidkoks und Flexikoks basieren auf der Rohölverarbeitung. Nach der Atmosphären- und Vakuumdestillation von Rohöl wird der Rückstand mit dem sogenannten Fluid Coking bzw. Flexi Coking verkokt, wobei beides charakteristischerweise in einem kontinuierlichen Wirbelbett stattfindet, was zu weitgehend kugelförmigen Partikeln führt. Acetylenkoks fällt als Abfallprodukt, zunächst grün, d.h. flüchtige Bestandteile enthaltend, in der Acetylenherstellung an, welche beispielsweise in der DE 29 47 005 A1 beschrieben ist. Shot Coke ist eine isotrope Kokssorte dessen Partikel zu einer sphärischen Form neigen und teils zwiebelschalenartig aufgebaut sind (siehe: Paul J. Ellis, "Shot Coke", Light Metals, 1996, Seiten 477-484).

Rußkoks wird hergestellt, indem eine Mischung aus Ruß und Pech verkokt wird und anschließend gemahlen wird. Da die Rußpartikel selbst sehr klein sind, in der Regel im Nanometerbereich, erhalten gemahlene Rußkokspartikel automatisch eine annähernd runde Geometrie mit isotropen Eigenschaften.

Wird synthetischer Graphit verwendet, so ist Feinkorngraphit aufgrund seiner geringen Anisotropie bevorzugt. In ähnlicher Weise wie beim Rußkoks erhalten die Partikel von gemahlenem Feinkorngraphit ebenfalls automatisch eine annähernd runde Geometrie.

Kugelgraphit basiert auf Naturgraphit und stellt ein Granulat von Naturgraphitflocken mit einem Binder dar. Dieser besitzt ebenfalls eine annähernd kugelförmige Geometrie. Kugelgraphit ist insbesondere dann bevorzugt, wenn das Bauteil eine besonders hohe Wärmeleitfähigkeit besitzen soll. Der Kugelgraphit liegt bevorzugt in carbonisierter, weiter bevorzugt in graphitierter Form vor.

Unter einem Granulat von Koks sind Granulate von allen möglichen Kokssorten mit einem polymeren Binder zu verstehen. Granulate sind deshalb bevorzugt, weil durch die Granulation ebenfalls Partikel mit annähernd runder Geometrie erhalten werden. Diese Granulate können auch in carbonisierter, weiter bevorzugt in graphitierter Form vorliegen, was bevorzugt ist.

Im Rahmen der Erfindung ist es möglich, dass der Koks mit einem flüssigen Aktivator wie beispielsweise einem flüssigen schwefelsauren Aktivator versetzt wird. Durch die Verwendung eines Aktivators kann einerseits die Aushärtungszeit und die notwendige Temperatur für das Aushärten des Binders reduziert werden, andererseits wird die Staubentwicklung der pulverförmigen Zusammensetzung reduziert. Vorteilhafterweise beträgt die Menge an Aktivator 0,05 Gew.-% bis 3 Gew.-%, bevorzugter 0,1 Gew.-% bis 1 Gew.-%, bezogen auf das Gesamtgewicht von Koks und Aktivator. Werden mehr als 3 Gew.-% bezogen auf das Gesamtgewicht von Aktivator und Koks verwendet, so verklebt die pulverförmige Zusammensetzung und die Rieselfähigkeit wird reduziert; werden weniger als 0,05 Gew.-% bezogen auf das Gesamtgewicht von Koks und Aktivator, so ist die Menge an Aktivator, welche mit dem Binder reagieren kann, zu gering, um die gewünschten obigen Vorteile zu erreichen.

Gemäß einer besonders bevorzugten Ausführungsform des erfindungsgemäßen Verfahrens umfasst die pulverförmige Zusammensetzung die genannten Graphitpartikel oder graphitierte Kokspartikel und Schritt d) umfasst eine Carbonisierung des Grünkörpers bei einer Temperatur zwischen 500°C und 1300°C. Hierdurch entsteht ein graphitisches Netzwerk. Hierunter ist zu verstehen, dass Graphitpartikel mit amorphen Kohlenstoffbrücken verbunden sind. Diese weisen annähernd gleich vorteilhafte hohe Wärmeleitfähigkeit und elektrische Leitfähigkeit auf, sind jedoch gegenüber einer Graphitierung des gesamten Grünkörpers mit geringerem Aufwand (weil geringere Temperatur) herzustellen.

Gemäß einer bevorzugten Ausführungsform des erfindungsgemäßen Verfahrens weist die pulverförmigen Zusammensetzung gemäß Schritt a) eine Körnung (d50) zwischen 3 µm und 500 µm, bevorzugt zwischen 50 µm und 350 µm und am meisten bevorzugt zwischen 100 µm und 250 µm auf. Bei kleineren Korngrößen ist das Verfahren kostenintensiver, da entsprechend mehr Lagen aufgetragen werden müssen. Gröbere Korngrößen führen wiederum zu entsprechend größeren Kohlenstoffbereichen im Bauteil, was sich nachteilig auf die mechanischen Eigenschaften auswirken kann. Um diese Korngrößen zu erreichen, kann der Koks gemahlen werden. Bei den bevorzugten Kokssorten mit relativ runder Form, wird jedoch bevorzugt nicht gemahlen, denn sonst würde die vorteilhafte runde Form zerstört werden. Hier wird daher die gewünschte Korngröße, beziehungsweise der gewünschte Korngrößenbereich bevorzugt durch Aussieben und Wahl der geeigneten Siebfraktion erhalten. Der Begriff "d50" bedeutet, dass 50 % der Partikel kleiner sind als der angegebene Wert. Der d50-Wert wurde unter Zuhilfenahme der lasergranulometrischen Methode bestimmt (ISO 13320), wobei ein Messgerät der Firma Sympatec GmbH mit zugehöriger Auswertesoftware verwendet wurde.

Gemäß einer bevorzugten Ausführungsform des erfindungsgemäßen Verfahrens entspricht die Körnung (d99) der pulverförmigen Zusammensetzung maximal dem 4-fachen, bevorzugt maximal dem 3-fachen, besonders bevorzugt maximal dem 2,5-fachen Wert des d50-Werts. Dies hat weniger Grobkörner und eine schmalere Korngrößenverteilung zur Folge, was ein sicheres Drucken und einen störungsfreien Pulverauftrag begünstigt. Der Begriff "d99" bedeutet, dass 99 % der Partikel kleiner sind als der angegebene Wert. Für die Bestimmung des d99-Werts wurde die gleiche Messmethode verwendet wie bei der Bestimmung des d50.

Bevorzugt weisen die Partikel der pulverförmigen Zusammensetzung im Korngrößenbereich des d50-Wertes im Mittel einen Formfaktor (Partikelbreite/Partikellänge) von mindestens 0,5, weiter bevorzugt mindestens 0,6, noch weiter bevorzugt mindestens 0,7 und am meisten bevorzugt mindestens 0,8 auf. Unter dem Formfaktor wird das Verhältnis von Partikelbreite zu Partikellänge verstanden. Unter dem Korngrößenbereich des d50-Wertes der Bereich von d50 +/-10 % zu verstehen. Der Formfaktor wurde gemäß ISO 13322-2 mit Hilfe eines sogenannten Camsizer-Geräts der Firma Retsch Technology bestimmt. Hierbei werden mit Hilfe einer Kamera und einem Bildanalysesystem die Partikel hinsichtlich Ihrer Breite und Länge bestimmt und ins Verhältnis gesetzt. Bei besonders feinem Pulver kann der Formfaktor anhand von Schliffbildern mit zugehöriger Bildanalyse alternativ ermittelt werden. Der Vorteil von nahezu runden Partikeln besteht im sicheren 3D-Drucken, störungsfreien Pulverauftrag und der geringeren Tendenz zur Rissindizierung bei thermomechanischer Beanspruchung. Darüber hinaus wurde gefunden, dass auch die Brucharbeit und die Bruchdehnung der entsprechenden Bauteile verbessert, d.h. erhöht wird, je runder die Partikel sind.

Der flüssige Binder in Schritt b) ist nicht besonders eingeschränkt, solange er sich hinsichtlich seiner Viskosität für das 3D-Drucken eignet. Mögliche Binder enthalten Phenolharz, Furanharz, Zellulose, Stärke, Zucker oder Silikate, insbesondere Wasserglas. Er kann auch als Lösung vorliegen. Gemäß einer bevorzugten Ausführungsform des erfindungsgemäßen Verfahrens umfasst der flüssige Binder in Schritt b) Phenolharz, Furanharz oder Wasserglas, am meisten bevorzugt Phenolharz und Furanharz, da die entsprechenden Grünkörper eine besonders hohe Stabilität aufweisen und diese Binder bei der Carbonisierung ausschließlich Kohlenstoff bilden.

Gemäß einer bevorzugten Ausführungsform des erfindungsgemäßen Verfahrens beträgt der Anteil des Binders im Grünkörper nach Schritt d) 2 bis 35 Gew.-%, bevorzugt 3 bis 25 Gew.-% und am meisten bevorzugt 3 bis 10 Gew.-%, bezogen auf das Gesamtgewicht des Grünkörpers. Je geringer der Binderanteil, desto schneller kann das 3D-Druckverfahren durchgeführt werden. Bei diesen Binderanteilen ist die Stabilität des Grünkörpers ausreichend bei gleichzeitig schnellem 3D-Druck.

Das Kunstharz, das die Kunststoffmatrix bildet ist nicht besonders eingeschränkt. Es kann Kunstharze wie Phenolharze, Furanharze, Epoxidharze, Polyesterharze, Polyurethanharze, Acrylatharze, Silikonharze, per- oder teilfluorierte organische Polymere, Phenylsulfitharze oder Cyanatesterharze umfassen. Bevorzugt umfasst das Kunstharz Phenolharz, Furanharz oder Epoxidharz. Phenolharz und Furanharz zeichnen sich durch ihre besonders hohe chemische Stabilität und Temperaturstabilität aus, während Epoxidharz eine besonders hohe mechanische Stabilität besitzt. Gemäß einer bevorzugten Ausführungsform des erfindungsgemäßen Verfahrens gehören der flüssige Binder in Schritt b) und das flüssige Kunstharz in Schritt e) derselben Harzklasse an. Dabei können sich der flüssige Binder und das flüssige Kunstharz beispielsweise in der Art und der Menge eines etwa enthaltenen Lösungsmittels unterscheiden. Diejenigen jeweiligen Anteile jedoch, die den letztlichen Binder im Grünkörper, beziehungsweise die letztliche Kunstharzmatrix im Bauteil bilden, sind bevorzugt von identischer Grundchemie. Umfasst beispielsweise der flüssige Binder ein Phenolharz, so umfasst auch das flüssige Kunstharz bevorzugt ein Phenolharz. Dies ist vorteilhaft hinsichtlich der chemischen Stabilität und dies insbesondere dann, wenn der Grünkörper, bzw. der Binder darin, keiner Carbonisierung unterzogen wird. In letzterem Fall ist es vorteilhaft, wenn Binder und Kunststoffmatrix chemisch kompatibel sind, was durch die hier beschriebene bevorzugte Auswahl der Ausgangsmaterialien gewährleistet wird.

Gemäß einer weiteren bevorzugten Ausführungsform der vorliegenden Erfindung wird die Art des Kunstharzes dahingehend ausgewählt, dass das resultierende erfindungsgemäße Bauteil eine möglichst geringe offene Porosität aufweist. Geringe Porosität bedeutet in diesem Zusammenhang eine Porosität von höchsten 2%, bevorzugt höchstens 0,5 % und ganz besonders bevorzugt von kleiner 0,2%. Bei der Aushärtung von Kunstharzen erfolgt meist ein Materialschwund, welcher zu Poren oder Rissen in der Kunstharzmatrix führt. Poren können beispielsweise dann wünschenswert sein, wenn beabsichtigt wird, die Kunstharzmatrix zu carbonisieren, also wie bei der oben beschriebenen Nachverdichtung, da dann die flüchtigen Bestandteile und Zersetzungsprodukte der Kunstharzmatrix durch die Poren nach außen gelangen können, ohne das Material zu beschädigen. Bauteile, die mit Harzen imprägniert werden, mit dem Ziel einer anschließenden Carbonisierung, haben daher stattdessen typischerweise eine offene Porosität von grösser 5% in den meisten Fällen eine offene Porosität sogar in der Größenordnung von 10%. Ist das Entweichen der Pyrolysegase bei der Carbonisierungsbehandlung aufgrund zu geringer offener Porosität nicht möglich, so kann das Material im schlimmsten Fall bei der Carbonisierung explodieren bzw. von durchgehenden Rissen überzogen sein. Die nach der Aushärtung des Kunstharzes entstehende Kunstharzmatrix soll erfindungsgemäß jedoch nicht carbonisiert werden, das entstehende Bauteil soll vielmehr das Endprodukt darstellen, wobei es in vielen Anwendungen von Vorteil ist, dass das Material des Bauteil möglichst dicht ist und dementsprechend eine geringe Porosität aufweist. Die Porosität im Sinn der offenen Porosität wird hierbei in Anlehnung an DIN 51918 bestimmt.

Ein weiterer Aspekt der vorliegenden Erfindung stellt ein dreidimensionales Bauteil aus einem Verbundwerkstoff enthaltend Kohlenstoff und Kunststoff dar, das herstellbar ist nach dem erfindungsgemäßen Verfahren. Das erhaltene Kohlenstoff/Kunstsoff Verbundbauteil ist von solchen mittels bekannten Methoden (Spritzgießen einer Kohlenstoff/Kunststoff-Mischung) erhältliches Bauteil darin unterscheidbar, dass die Kohlenstoffpartikel in einer hohen Isotropie im Bauteil verteilt vorliegen. Bei Verfahren wie dem Spritzguss richten sich nicht perfekt runde Partikel immer in Fließrichtung der Spritzgussmasse aus. Auch andere Formgebungsverfahren, wie Gesenkpressen haben eine analogen Ausrichtung und damit eine Anisotropie zur Folge. Aufgrund des praktisch drucklosen lagenweisen Aufbaus des erfindungsgemäßen Bauteils beim 3D-Druck wird ein homogenes Gefüge erhalten und es erfolgt keinerlei Vorzugsorientierung des Gefüges mehr. Weiterhin sind die Möglichkeiten der Formgestaltung des Bauteils durch den 3D-Druck in seiner Komplexität praktisch unbegrenzt.

Gemäß einer bevorzugten Ausführungsform des erfindungsgemäßen Bauteils ist dieses erhältlich nach den bevorzugten Verfahren der vorliegenden Erfindung, wonach der Grünkörper zumindest carbonisiert oder sogar graphitiert wird. Durch die Umwandlung zumindest des Binders in Kohlenstoff entsteht ein im Bauteil durchgängiges und stoffschlüssiges Kohlenstoffnetzwerk. Dies steigert sowohl die Wärmeleitfähigkeit als auch die elektrische Leitfähigkeit des Bauteils. Noch mehr gilt dies für die Bauteile, welcher der oben beschriebenen bevorzugten Nachverdichtung unterzogen werden, da hierdurch die Menge an zwischen den Kohlenstoffpartikeln liegendem und diese miteinander verbindendem Kohlenstoff erhöht wird. Derartige Bauteile sind mit bekannten Methoden, wie beispielsweise dem bereits beschriebenen Spritzgießen, nicht herstellbar. Der Grund hierfür liegt darin, dass entsprechende unter hohem Druck geformte und daher sehr dichte und harzreiche Kohlenstoff/Kunststoff-Verbundwerkstoffe bei dem Versuch diese zu Carbonisieren zerstört werden würden, d.h. sie würden zumindest Risse erhalten oder sogar bersten, weil die gasförmigen Pyrolyseprodukte aus dem dichten Körper nicht einfach entweichen können.

Das Bauteil der vorliegenden Erfindung stellt ein dreidimensionales Bauteil aus einem Verbundwerkstoff enthaltend Kohlenstoff und Kunststoff dar, welches zwischen 25 und 50 Gew.-% Kunststoffmatrix und zwischen 50 und 75 Gew.-% Kohlenstoff in zumindest teilweise partikulärer Form umfasst und diese Kohlenstoffpartikel im Korngrößenbereich des d50-Wertes im Mittel einen Formfaktor (Breite/Länge) von mindestens 0,5, bevorzugt mindestens 0,6, weiter bevorzugt mindestens 0,7 und am meisten bevorzugt mindestens 0,8 aufweisen. Da dieses Bauteil durch das erfindungsgemäße Verfahren herstellbar ist, gelten sämtliche im Zusammenhang mit dem Verfahren genannten Definitionen oder bevorzugte Ausführungsformen in analoger Weise.

Gemäß einer bevorzugten Ausführungsform des erfindungsgemäßen Bauteils ist die pulverförmige Zusammensetzung, beziehungsweise sind die Kohlenstoffpartikel, mit freiem Kohlenstoff gebunden und stellt, beziehungsweise stellen, so im Bauteil ein durchgängiges, stoffschlüssig verbundenes Kohlenstoff-Netzwerk dar.

Gemäß einer bevorzugten Ausführungsform weist das erfindungsgemäße Bauteil antistatische Eigenschaften und einen spezifischen elektrischen Widerstand im Bereich von 10⁴ Ohm^{∗}µm bis 10⁷ Ohm^{∗}µm auf. Dies trifft dann zu, wenn der Binder im Grünkörper keiner Carbonisierung oder Graphitierung unterzogen wird.

Weiter bevorzugt weist das Bauteil elektrische Leitfähigkeit und einen spezifischen elektrischen Widerstand von 500 Ohm^{∗}µm oder weniger, bevorzugt 300 Ohm^{∗}µm oder weniger und besonders bevorzugt 50 Ohm^{∗}µm oder weniger auf (bestimmt in Anlehnung an DIN 51911). Dies gilt für die bevorzugten Bauteile deren Grünkörper samt Binder zumindest carbonisiert oder sogar graphitiert wurde. Die Vorteile hiervon wurden bereits weiter oben erläutert.

Bevorzugt weist das erfindungsgemäße Bauteil einen E-Modul im Bereich von 3 bis 10 GPa, bevorzugt im Bereich von 4 bis 7 GPa auf. Der E-Modul wurde dabei aus der linearen Anfangssteigung der Biegekurve aus dem Dreipunktbiegeversuch der Proben zur Ermittlung der Biegefestigkeit ermittelt.
Bevorzugt weist das erfindungsgemäße Bauteil eine Festigkeit von mindestens 15 MPa, bevorzugt mindestens 20 MPa auf. Die Festigkeit wurde nach dem 3-Punkt-Biegeverfahren in Anlehnung an DIN 51902 bestimmt.

Bevorzugt weist das erfindungsgemäße Bauteil einen thermischen Ausdehnungskoeffizienten, gemessen in Anlehnung an DIN 51909 zwischen Raumtemperatur und 150°C, von höchstens 45 µm)/(m^{∗}K), weiter bevorzugt höchstens 30 µm/(m^{∗}K) und noch weiter bevorzugt höchstens 20 µm/(m^{∗}K)auf.

Bevorzugt weist das erfindungsgemäße Bauteil eine thermische Leitfähigkeit von mindestens 2 W/(m^{∗}K), bevorzugt mindestens 10 W/(m^{∗}K) und besonders bevorzugt von mindestens 30 W/(m^{∗}K) auf, wobei die Wärmeleitfähigkeit in Anlehnung an DIN 51908 bestimmt wurde.

Bevorzugt weist das erfindungsgemäße Bauteil Hohlräume, Kühlkanäle oder Hinterschnitte auf und besteht insgesamt aus einem gleichmäßigen oder einem sich gemäß der gewünschten Materialeigenschaften des Bauteils graduell ändernden Gefüge der Bestandteile.

Aufgrund seiner genannten vorteilhaften Eigenschaften eignet sich das erfindungsgemäße Bauteil für eine Vielzahl von Anwendungen. Grundsätzlich sind die Eigenschaften vorteilhaft für Gleitelemente und elektrische Kontakte im Temperaturbereich von vorzugsweise 200°C, je nach verwendeter Kunstharzmatrix. Darüber hinaus kann das erfindungsgemäße Bauteil derart harzimprägniert werden, dass es flüssigkeitsdicht ist, was weitere Anwendungen, wie zum Beispiel korrosionsstabile Wärmetauscheranwendungen, oder Pumpengehäuse erschließt. Die chemische Beständigkeit des Werkstoffes in Kombination mit der herstellbaren komplexen Bauteilstruktur ist desweiteren als statische Mischerelemente, Turbulatoren, und auch für Kolonneneinbauten wie Blasenkappen, Füllkörper, Packungen etc. im chemischen Appparatebau z.B. für das Säurenhandling sinnvoll einsetzbar. Unter Turbulatoren werden Elemente verstanden, die z.B. in Rohren eingebaut werden um bewusst turbulenten Strömungsverhältnisse zu erwirken. Ein weiterer Aspekt der vorliegenden Erfindung stellt die Verwendung eines Bauteils als Laufrad und Trenn- oder Drehschieber in Pumpen und Verdichtern, als Pumpengehäuse , als Einbauten in Kolonnen, als statische Mischerelemente, als Turbulatoren, als elektrisches Heizelement, als elektrischer Kontakt, wie zum Beispiel Bürsten und Schleifstücke für die Übertragung elektrischer Ströme, als Sichterrad, als Wärmetauscher oder Element für Wärmetauscher, als Gleitelement in Lagern oder Scharnieren umfassend Gleitlager und Gleitringdichtung, als Nocke, in Getrieben, als Zahnrad, als Gleitplatte und Gleitrohr von flexiblen Wellen und als Kolben und Kolbenhülse dar.

Die vorliegende Erfindung wird im Folgenden anhand von Beispielen illustriert.

### Beispiel 1

Kalzinierter Steinkohlenteerpechkoks wurde gemahlen und hatte nach der Mahlung und Siebung eine Korngrößenverteilung von d10 = 130 µm, d50 = 230 µm und d90 = 390 µm und einen mittleren Formfaktor von 0,69 (im Korngrößenbereich von d50 +/-10%). Der Koks wird zunächst mit 1 Gew.-% eines schwefelsauren flüssigen Aktivators für Phenolharz, bezogen auf das Gesamtgewicht von Koks und Aktivator, versetzt und mit einer 3D-Druck Pulverbettmaschine verarbeitet. Eine Rackeleinheit legt dabei auf ein ebenes Pulverbett eine dünne Kokspulverlage (ca. 0,3 mm Höhe) ab und eine Art Tintenstrahldruckeinheit druckt eine alkoholische Phenolharzlösung entsprechend der gewünschten Bauteilgeometrie auf das Koksbett. Im Anschluss daran wird der Drucktisch um die Lagenstärke abgesenkt und erneut eine Lage Koks aufgetragen und erneut Phenolharz lokal aufgedruckt. Durch die wiederholte Vorgehensweise wurden dabei quaderförmige Prüfkörper mit den Abmessungen 168 mm (Länge) x 22 mm (Breite) x 22 mm (Höhe) aufgebaut. Ist das komplette "Bauteil" gedruckt, wird das Pulverbett in einen auf 140 °C vorgewärmten Ofen eingebracht und dort ca. 6 Stunden gehalten. Auch wenn hier bereits von einem Bauteil die Rede ist, so versteht sich von selbst, dass damit noch nicht das fertige erfindungsgemäße Bauteil gemeint ist. Dabei härtet das Phenolharz aus und bildet einen formstabilen Grünkörper. Das überschüssige Kokspulver wird nach der Abkühlung abgesaugt und der Grünkörper des Bauteils entnommen.

Die Dichte des Grünkörpers beträgt nach der Aushärtung des Binders 0,88 g/cm³. Die Dichte wurde geometrisch (durch Wiegen und Bestimmung der Geometrie) bestimmt. Der Grünkörper hatte einen Harzanteil von 5,5 Gew.-%, welcher durch eine Carbonisierungsbehandlung bestimmt wurde. Dabei wurde so vorgegangen, dass die Kohlenstoff-Ausbeute der verwendeten ausgehärteten Harzkomponente vorab mittels einer thermogravimetrischen Analyse (TGA) auf 58 Gew.-% bestimmt wurde. Durch den Massenverlust des Grünkörpers nach der anschließenden Carbonisierung bei 900 °C unter Schutzgasatmosphäre 1 Stunde lang, konnte dann der ursprüngliche Harzanteil im Grünkörper errechnet werden.

Anschließend wurde der Grünkörper einer Phenolharzimprägnierung unterzogen und erneut bei 900 °C carbonisiert. Die Dichte wurde dadurch auf 1,1 g/cm³ erhöht. Abschließend wurde der so nachverdichtete Kohlenstoffkörper mit Phenolformaldehydharz (Hersteller Hexion) mit einer Viskosität bei 20°C von 700 mPas und einem Wassergehalt nach Karl Fischer (ISO 760) von ca. 15 % einer Vakuum- Druck-Imprägnierung unterworfen. Hierbei wurde wie folgt vorgegangen: die Kohlenstoffkörper wurden in einen Imprägnierkessel eingelegt. Der Kesseldruck wurde auf 10 mbar reduziert und nach Einbringen des Harzes auf 11 bar erhöht. Nach einer Verweilzeit von 10 Stunden wurden die Kohlenstoffprüfkörper aus dem Imprägnierkessel entnommen und zum Aushärten des Harzes unter Druck von 11 bar auf 160 °C erhitzt. Die Aufheizzeit betrug etwa 2 Stunden, die Verweilzeit bei 160°C etwa 10 Stunden. Nach der Härtung hatten die erkalteten Prüfkörper eine Dichte von 1,45 g/cm³ (Beispiel 1).

### Beispiel 2:

Beispiel 2 unterscheidet sich von Beispiel1 dadurch, dass der nachverdichtete carbonisierte Kohlenstoffkörper zusätzlich vor der abschließenden Phenolformaldehydharzimprägnierung einer Graphitierungsbehandlung bei 2400°C in Schutzgasatmosphäre unterworfen wurde. Die analog zu Beispiel 1 durchgeführte abschließende Harzimprägnierung erbrachte eine Prüfkörperdichte von 1,58 g/cm³ (Beispiel 2).

### Beispiel 3:

Kalzinierter Acetylenkoks wurde ungemahlen mit einer Partikelgrößenverteilung von d10 = 117 µm, d50 = 190 µm und d90 = 285 µm und einem mittleren Formfaktor von 0,82 (im Korngrößenbereich von d50 +/- 10%) mit 0,35 Gew.-% des flüssigen Aktivators gemäß Beispiel 1 versetzt und analog dem Beispiel 1 zu einem Grünkörper verarbeitet.

Der Grünkörper hatte einen Harzanteil von 3,0 Gew.-%. Die Dichte des Grünkörpers lag bei 0,98 g/cm³ und damit deutlich höher als beim Steinkohlenteerpechkoks aus Beispiel 1. Weiterhin zeigte dieser Grünkörper im Vergleich zu dem von Beispiel 1 eine höhere Festigkeit, was die Handhabung erleichterte. Auf eine Nachverdichtung dieses Grünkörpers kann daher verzichtet werden, was die Herstellungskosten senkt.

Die so hergestellten grünen Kohlenstoffkörper wurden abschließend der Harzimprägnier-und Härtungsprozedur aus Beispiel 1 unterworfen. Die Dichte der ausgehärten Kunststoff/ Kohlenstoffprüfkörper wurde zu 1,43 g/cm³ bestimmt (Beispiel 3)

### Beispiel 4:

Beispiel 4 unterscheidet von Beispiel 3 dadurch, dass anstelle der Phenolharzimprägnierung eine Epoxidharzimprägnierung an den grünen Kohlenstoffprüfkörper durchgeführt wurde. Hierbei wurde wie folgt vorgegangen:
Die Proben wurden in ein Kunststoffgefäß gegeben und mit einem vorab hergestellten Epoxidharzgemisch aus 100 Teilen Harz EPR L20 (Hersteller Hexion) und 34 Teilen Härter EPH 960 (Hersteller Hexion) übergossen. Auf die eingetauchten Proben wurde dann eine Stunde lang ein Vakuum von 100mbar aufgegeben. Abschließend wurde die Infiltration bei Normalluftdruck 30 Minuten lang weitergeführt. Die Probekörper tauchten dabei vollständig über die komplette Infiltrierungszeit (bei Raumtemperatur) in die Lösung ein. Nach dem Infiltrieren des Epoxidharzes wurden die Proben entnommen, mittels Zellstofftuch an der Oberfläche gereinigt. Anschließend wurden die mit Harz getränkten Proben im Trockenschrank zunächst 2 Stunden lang bei 100°C und abschließend 3 Stunden lang bei 150°C an Luft und unter Normaldruck gehärtet. Nach dem Härten des Harzes hatten die Probekörper im Mittelwert eine Dichte von 1,40 g/cm³ (Beispiel 4). Da Epoxidharz durch Polyadditionsreaktion härtet, ist durch den Härtungsschritt kein Masseverlust messbar.

### Beispiel 5:

Beispiel 5 unterscheidet von Beispiel 3 dadurch, dass anstelle der Phenolharzimprägnierung eine Furanharztauchimprägnierung an den grünen Kohlenstoffprüfkörpern durchgeführt wurde. Der Vorteil der Furanharzimprägnierung anstelle der Phenolharzimprägnierung liegt in der extrem niedrigen Viskosität des Furanharzsystems von kleiner 100 mPas, wodurch eine reine Tränkung ohne Druckbeaufschlagung einfach umgesetzt werden kann. Hierbei wurde wie folgt vorgegangen:
Die Proben wurden in ein Glasgefäß gegeben und mit einer vorab hergestellten Lösung aus einem Teil Maleinsäureanhydrid (Hersteller Aug. Hedinger GmbH & Co. KG) und 10 Teilen Furfurylalkohol (Hersteller International Furan Chemicals B.V.) übergossen. Die Probekörper tauchten dabei vollständig über die komplette Infiltrierungszeit von zwei Stunden (bei Raumtemperatur) in die Lösung ein. Nach dem Infiltrieren der Furfurylalkohol / Maleinsäureanhydrid Lösung wurden die Proben entnommen, mittels Zellstofftuch an der Oberfläche gereinigt. Anschließend wurden die mit Harz getränkten Proben im Trockenschrank gehärtet. Dabei wurde stufenweise die Temperatur von 50°C auf 150°C erhöht. Das eigentliche Härtungsprogramm war dabei wie folgt: 19 Stunden bei 50°C, 3 Stunden bei 70°C, 3 Stunden bei 100°C und abschließend 1,5 Stunden bei 150°C. Die mittlere Dichte der furanharzimprägnierten Prüfkörper wurde nach der Härtung zu 1,31 g/cm³ bestimmt (Beispiel 5).

Alle Prüfkörper der Beispiele 1-5 wurden einer Materialcharakterisierung unterworfen. Die Ergebnisse dieser Untersuchungen sind in nachfolgender Tabelle wiedergegeben:

| | Beispiel 1 (Mittelwerte) | Beispiel 2 (Mittelwerte) | Beispiel 3 (Mittelwerte) | Beispiel 4 (Mittelwerte) | Beispiel 5 (Mittelwerte) |
|---|---|---|---|---|---|
| AD (g/cm³) | 1,45 | 1,58 | 1,43 | 1,40 | 1,31 |
| ER (Ohmµm) | 350 | 35 | 500000 | 100000 | 120000 |
| YM 3p (GPa) | 6 | 6 | 6 | 6 | 5 |
| FS 3p (MPa) | 30 | 15 | 20 | 45 | 25 |
| CTE RT/150°C (µm/(m*K)) | 27 | 12 | 24 | 40 | 24 |
| TC (W/(m*K)) | 2 | 40 | <1 | <1 | <1 |

| | | | | | |
|---|---|---|---|---|---|
| AD (g/cm³): Dichte (geometrisch) in Anlehnung an ISO 12985-1 ER (Ohmµm): elektrischer Widerstand in Anlehnung an DIN 51911 YM 3p (GPa): E-Modul (Steifigkeit), bestimmt aus dem 3-Punkt-Biegeversuch FS 3p (MPa): 3-Punkt Biegefestigkeit in Anlehnung an DIN 51902 CTE RT/150°C (µm/(m*K)): Wärmeausdehnungskoeffizient gemessen zwischen Raumtemperatur und 150°C in Anlehnung an DIN 51909 TC (W/(m*K)): Wärmeleitfähigkeit bei Raumtemperatur in Anlehnung an DIN 51908 Beispiel 1: Steinkohlenteerpechkoks, Grünkörper zusätzlich Phenolharzimprägniert, bei 900°C carbonisiert, abschließend mit Phenolharz im Vakuum-Druck-Imprägnierungsprozess endverdichtet. Beispiel 2: Steinkohlenteerpechkoks, Grünkörper nicht Phenolharzimprägniert, bei 900°C carbonisiert, anschließend bei 2400°C graphitiert, abschließend mit Phenolharz im Vakuum-Druck-Imprägnierungsprozess endverdichtet Beispiel 3: Acetylenkoks, Grünkörper direkt mit Phenolharz im Vakuum-Druck-Imprägnierungsprozess endverdichtet. Beispiel 4: Acetylenkoks, Grünkörper direkt mit Epoxidharzsystem durch Vakuumimprägnierung endverdichtet. Beispiel 5: Acetylenkoks, Grünkörper direkt mit einem Furanharzsystem durch Tauchimprägnierung endverdichtet. | | | | | |

Demnach liegt in den Beispielen 1 und 2 ein durchgehendes Kohlenstoffnetzwerk vor, da die Kokspartikel mit amorphem Kohlenstoff, beziehungsweise die graphitierten Kokspartikel mit graphitähnlichem Kohlenstoff verbunden sind. Gegenüber den Beispielen 3, 4 und 5 zeigen diese eine beträchtliche Erniedrigung des elektrischen Widerstands, wobei durch die Graphitierung des Grünkörpers (Beispiel 2) der elektrische Widerstand noch weiter erniedrigt wird. Analog dazu erhöht sich durch die thermische Behandlung auch die thermische Leitfähigkeit der Bauteile.

Die Epoxidmatrix (Beispiel 4) zeigt eine höhere Festigkeit gegenüber Phenol- und Furanharz, wobei letztere jedoch temperaturstabiler und chemisch stabiler sind. Hinsichtlich des Aufwands bei der Imprägnierung, lässt sich mit Furanharz einfach über eine Tauchimprägnierung Imprägnieren, während mit Phenolharz und Epoxidharz aufgrund der üblicherweise höheren Viskosität mittels Vakuum-Imprägnierungsprozess, beziehungsweise Vakuum-Druck-Imprägnierungsprozess imprägniert werden muss.

## Patentansprüche

1. Verfahren zur Herstellung eines dreidimensionalen Bauteils aus einem Verbundwerkstoff enthaltend Kohlenstoff und Kunststoff umfassend die folgenden Schritte:
a) Bereitstellen einer pulverförmigen Zusammensetzung umfassend einen oder mehrere Bestandteile, welche ausgewählt sind aus der Gruppe bestehend aus amorphem Kohlenstoff, Graphit und deren Mischformen,
b) Bereitstellen eines flüssigen Binders,
c) flächiges Ablegen einer Lage aus dem in a) bereitgestellten Material und lokales Ablegen von Tröpfchen des in b) bereitgestellten Materials auf diese Lage und beliebig häufiges Wiederholen des Schrittes c), wobei das lokale Ablegen der Tröpfchen in den jeweils nachfolgenden Wiederholungen dieses Schrittes entsprechend der gewünschten Form des herzustellenden Bauteils angepasst wird,
d) zumindest teilweises Aushärten oder Trocknen des Binders und Erhalt eines die gewünschte Form des Bauteils aufweisenden Grünkörpers,
e) Imprägnieren des Grünkörpers mit einem flüssigen Kunstharz und
f) Aushärten des Kunstharzes zu einer Kunstharzmatrix.

2. Verfahren nach Anspruch 1, **dadurch gekennzeichnet, dass** Schritt d) eine Carbonisierung des Grünkörpers bei einer Temperatur zwischen 500°C und 1300°C umfasst.

3. Verfahren nach Anspruch 1, **dadurch gekennzeichnet, dass** der Grünkörper zwischen den Schritten d) und e) ein- oder mehrmalig einer Nachverdichtung unterzogen wird, umfassend die folgenden Schritte:
d1) Imprägnieren des Grünkörpers mit einem Kohlenstofflieferanten ,
d2) Carbonisieren des Grünkörpers bei einer Temperatur zwischen 500°C und 1300°C.

4. Verfahren nach Anspruch 1, **dadurch gekennzeichnet, dass** die pulverförmige Zusammensetzung Acetylenkoks, Flexikoks, Fluidkoks, Shot Coke Steinkohlenteerpechkoks, Petrolkoks, Rußkoks, Anthrazit, synthetischer Graphit, Kugelgraphit, mikrokristalliner Naturgraphit, carbonisierte lonenaustauscherharzkügelchen, ein Granulat von Koks umfasst.

5. Verfahren nach Anspruch 1, **dadurch gekennzeichnet, dass** die pulverförmige Zusammensetzung Graphitpartikel oder graphitierte Kokspartikel umfasst und dass Schritt d) eine Carbonisierung des Grünkörpers bei einer Temperatur zwischen 500°C und 1300°C umfasst.

6. Verfahren nach Anspruch 1, **dadurch gekennzeichnet, dass** die Partikel der pulverförmigen Zusammensetzung im Korngrößenbereich des d50-Werts, was den d(50)-Wert +/-10 % darstellt, im Mittel einen Formfaktor (Breite/ Länge) bestimmt gemäss ISO 13322-2 von mindestens 0,5 aufweisen.

7. Verfahren nach Anspruch 1, **dadurch gekennzeichnet, dass** der flüssige Binder in Schritt b) Phenolharz, Furanharz oder Wasserglas umfasst.

8. Verfahren nach Anspruch 1, **dadurch gekennzeichnet, dass** das Kunstharz dahingehend ausgewählt wird, dass das Bauteil eine offene Porosität von höchsten 2%, bevorzugt höchstens 0,5 % und ganz besonders bevorzugt von höchstens 0,2 % aufweist.

9. Verfahren nach Anspruch 1, **dadurch gekennzeichnet, dass** der flüssige Binder in Schritt b) und das flüssige Kunstharz in Schritt e) der gleichen Harzklasse angehören.

10. Dreidimensionales Bauteil aus einem Verbundwerkstoff enthaltend Kohlenstoff und Kunststoff hergestellt nach einem Verfahren gemäß einem der vorangehenden Ansprüche, **dadurch gekennzeichnet, dass** das Bauteil zwischen 25 und 50 Gew.-% Kunststoffmatrix und zwischen 50 und 75 Gew.-% Kohlenstoff in zumindest teilweise partikulärer Form umfasst und diese Kohlenstoffpartikel im Korngrößenbereich des d50-Wertes, was den d(50)-Wert +/-10 % darstellt, im Mittel einen Formfaktor (Breite/ Länge) bestimmt gemäss ISO 13322-2 von mindestens 0,5 aufweisen.

11. Bauteil nach Anspruch 10, **dadurch gekennzeichnet, dass** die pulverförmige Zusammensetzung im Bauteil, beziehungsweise die Kohlenstoffpartikel, mit freiem Kohlenstoff gebunden ist, beziehungsweise sind, und so im Bauteil ein durchgängiges, stoffschlüssig verbundenes Kohlenstoff-Netzwerk darstellt, beziehungsweise darstellen.

12. Bauteil nach Anspruch 10, **dadurch gekennzeichnet, dass** das Bauteil eine offene Porosität von höchsten 2%, bevorzugt höchstens 0,5 % und ganz besonderes bevorzugt von höchstens 0,2 % aufweist.

13. Bauteil nach Anspruch 10, **dadurch gekennzeichnet, dass** das Bauteil eine thermische Leitfähigkeit von mindestens 2 W/(m^{∗}K) in Anlehnung an DIN 51908 bestimmt, aufweist.

14. Verwendung eines Bauteils nach Anspruch 10 als Laufrad und Trenn- oder Drehschieber in Pumpen und Verdichtern, als Pumpengehäuse, als Einbauten in Kolonnen, als statische Mischerelemente, als Turbulatoren, als elektrisches Heizelement, als elektrischer Kontakt, als Sichterrad, als Wärmetauscher oder Element für Wärmetauscher, als Gleitelement in Lagern oder Scharnieren umfassend Gleitlager und Gleitringdichtung, als Nocke, in Getrieben, als Zahnrad, als Gleitplatte und Gleitrohr von flexiblen Wellen und als Kolben und Kolbenhülse.

## Claims

1. A method for producing a three-dimensional component from a composite material containing carbon and plastics material, which method comprises the following steps:
a) providing a powdered composition comprising one or more constituents selected from the group consisting of amorphous carbon, graphite and hybrid forms thereof,
b) providing a liquid binder,
c) depositing a layer of the material provided in a) in a planar manner and locally depositing droplets of the material provided in b) on said layer, and repeating step c) any number of times, wherein the local deposition of the droplets in the subsequent repetitions of said step is adjusted according to the desired shape of the component to be produced,
d) at least partially hardening or drying the binder and obtaining a green body that has the desired shape of the component,
e) impregnating the green body with a liquid synthetic resin, and
f) hardening the synthetic resin so as to form a synthetic resin matrix.

2. The method according to claim 1, **characterised in that** step d) comprises carbonising the green body at a temperature of between 500 °C and 1300 °C.

3. The method according to claim 1, **characterised in that** the green body is subjected to a post-compaction process one or multiple times between steps d) and e), which process comprises the following steps:
d1) impregnating the green body with a carbon source,
d2) carbonising the green body at a temperature of between 500 °C and 1300 °C,

4. The method according to claim 1, **characterised in that** the powdered composition comprises acetylenecoke, flexicoke, fluid coke, shot coke, coal tar pitch coke, petroleum coke, carbon black coke, anthracite, synthetic graphite, spheroidal graphite, microcrystalline natural graphite, carbonised ion-exchange resin beads or a coke granulate.

5. The method according to claim 1, **characterised in that** the powdered composition comprises graphite particles or graphitised coke particles, and **in that** step d) comprises carbonising the green body at a temperature of between 500 °C and 1300 °C.

6. The method according to claim 1, **characterised in that** the particles of the powdered composition in the grain size range of the d50 value, which represents the d(50) value +/- 10%, have, on average, a shape factor (width/length) determined in accordance with ISO 13322-2 of at least 0.5.

7. The method according to claim 1, **characterised in that** the liquid binder in step b) comprises phenolic resin, furan resin or water glass.

8. The method according to claim 1, **characterised in that** the synthetic resin is selected such that the component has an open porosity of at most 2%, preferably at most 0.5%, and very particularly preferably at most 0.2%.

9. The method according to claim 1, **characterised in that** the liquid binder in step b) and the liquid synthetic resin in step e) belong to the same class of resins.

10. A three-dimensional component from a composite material containing carbon and plastics material which is produced using a method according to any one of the preceding claims, **characterised in that** the component comprises between 25 and 50 wt.% of plastics matrix and between 50 and 75 wt.% of carbon in an at least partially particulate form, and these carbon particles in the grain size range of the d50 value, which represents the d(50) value +/- 10%, have, on average, a shape factor (width/length) determined in accordance with ISO 13322-2 of at least 0.5.

11. The component according to claim 10, **characterised in that** the powdered composition in the component or the carbon particles is/are bound to free carbon, and therefore constitute(s) a continuous, integrally connected carbon network in the component.

12. The component according to claim 10, **characterised in that** the component has an open porosity of at most 2%, preferably at most 0.5%, and very particularly preferably at most 0.2%.

13. The component according to claim 10, **characterised in that** the component has a thermal conductivity following DIN 51908 of at least 2 W/(m·K).

14. The use of a component according to claim 10 as an impeller and shut-off valve or rotary valve in pumps and compressors, as a pump housing, as fittings in columns, as static mixer elements, as turbulators, as an electric heating element, as an electrical contact, as a classifier wheel, as a heat exchanger or an element for a heat exchanger, as a sliding element in bearings or hinges comprising a slide bearing and mechanical seal, as a cam, in gears, as a gearwheel, as a slide plate and slide tube of flexible shafts, and as a piston and piston sleeve.

## Revendications

1. Procédé de fabrication d'un composant tridimensionnel en matériau composite contenant du carbone et du plastique, comprenant les étapes suivantes :
a) la mise à disposition d'une composition pulvérulente comprenant un ou plusieurs constituants choisis dans le groupe constitué du carbone amorphe, du graphite et de leurs formes mélangées,
b) la mise à disposition d'un liant liquide,
c) le dépôt d'une couche du matériau fourni en a) sur une grande surface et le dépôt local de gouttelettes du matériau fourni en b) sur cette couche et le renouvellement de l'étape c) aussi souvent que souhaité, le dépôt local des gouttelettes lors des répétitions ultérieures de cette étape étant adapté en fonction de la forme souhaitée du composant à fabriquer,
d) le durcissement ou le séchage au moins partiel du liant et l'obtention d'un corps vert ayant la forme souhaitée du composant,
e) l'imprégnation du corps vert d'une résine synthétique liquide et
f) le durcissement de la résine synthétique en une matrice de résine synthétique.

2. Procédé selon la revendication 1, **caractérisé en ce que** l'étape d) comprend la carbonisation du corps vert à une température comprise entre 500 °C et 1300 °C.

3. Procédé selon la revendication 1, **caractérisé en ce que** le corps vert est soumis entre les étapes d) et e) une ou plusieurs fois à une recompression, comprenant les étapes suivantes :
d1) l'imprégnation du corps vert d'un fournisseur de carbone,
d2) la carbonisation du corps vert à une température comprise entre 500 °C et 1300 °C.

4. Procédé selon la revendication 1, **caractérisé en ce que** la composition pulvérulente comprend du coke d'acétylène, du flexicoke, du coke fluide, du coke de brai de houille en grenaille, du coke de pétrole, du coke de noir de carbone, de l'anthracite, du graphite synthétique, du graphite sphéroïdal, du graphite naturel microcristallin, des billes de résine échangeuse d'ions carbonisées, un granulé de coke.

5. Procédé selon la revendication 1, **caractérisé en ce que** la composition pulvérulente comprend des particules de graphite ou des particules de coke graphitisées et **en ce que** l'étape d) comprend la carbonisation du corps vert à une température comprise entre 500 °C et 1300 °C.

6. Procédé selon la revendication 1, **caractérisé en ce que** les particules de la composition pulvérulente dans la plage de granulométrie de la valeur d50, qui représente la valeur d(50) +/- 10 %, présentent en moyenne un facteur de forme (largeur/longueur) d'au moins 0,5, déterminé selon ISO 13322-2.

7. Procédé selon la revendication 1, **caractérisé en ce que** le liant liquide de l'étape b) comprend de la résine phénolique, de la résine de furane ou du verre d'eau.

8. Procédé selon la revendication 1, **caractérisé en ce que** la résine synthétique est choisie de sorte que le composant présente une porosité ouverte de 2 % au plus, de préférence de 0,5 % au plus et de manière tout particulièrement préférée de 0,2 % au plus.

9. Procédé selon la revendication 1, **caractérisé en ce que** le liant liquide de l'étape b) et la résine synthétique liquide de l'étape e) appartiennent à la même classe de résine.

10. Composant tridimensionnel en matériau composite contenant du carbone et du plastique fabriqué selon un procédé selon l'une des revendications précédentes, **caractérisé en ce que** le composant comprend entre 25 et 50 % en poids de matrice plastique et entre 50 et 75 % en poids de carbone sous forme au moins partiellement particulaire et ces particules de carbone dans la plage de granulométrie de la valeur d50, qui représente la valeur d(50) +/-10 %, présentent en moyenne un facteur de forme (largeur/longueur) d'au moins 0,5, déterminé selon ISO 13322-2.

11. Composant selon la revendication 10, **caractérisé en ce que** la composition pulvérulente dans le composant, ou les particules de carbone, est ou sont liées avec du carbone libre, et représente(nt) ainsi un réseau de carbone continu, connecté par liaison de matière dans le composant.

12. Composant selon la revendication 10, **caractérisé en ce que** le composant présente une porosité ouverte de 2 % de plus, de préférence de 0,5 % de plus et de manière tout particulièrement préférée de 0,2 % de plus

13. Composant selon la revendication 10, **caractérisé en ce que** le composant présente une conductivité thermique de 2 W/(m^{∗}K) au plus, déterminée sur la base de la norme DIN 51908.

14. Utilisation d'un composant selon la revendication 10 en tant que turbine et vanne à tiroir isolante ou rotative dans des pompes et compresseurs, en tant que corps de pompe, en tant que composants intégrés dans des colonnes, en tant qu'éléments mélangeurs statiques, en tant que turbulateurs, en tant qu'élément chauffant électrique, en tant que contact électrique, en tant que roue classificatrice, en tant qu'échangeur de chaleur ou élément pour échangeur de chaleur, en tant qu'élément coulissant dans des roulements ou des charnières, y compris un roulement coulissant et une garniture mécanique d'étanchéité, en tant que came, dans des engrenages, en tant que roue dentée, en tant que plaque coulissante et tube coulissant d'arbres flexibles et en tant que piston et manchon de piston.
